# EUROPEAN PATENT APPLICATION

(11) **EP 1 686 409 A1**
(43) Date of publication of application: **02.08.2006**
(21) Application number: 06001444.6
(22) Date of filing: 24.01.2006
(51) Int. Cl.: G02B 23/10, G01C 17/00

(54) **Telescopic system with display in visual field**

(30) Priority: 26.01.2005 JP 2005017636; 26.01.2005 JP 2005017637
(71) Applicant: Fujinon Corporation, Saitama-shi, Saitama (JP)
(72) Inventor: Nagata, Koichi, Saitama-shi Saitama (JP); Noguchi, Yasuhiro, Saitama-shi Saitama (JP); Okamura, Kenjiro, Saitama-shi Saitama (JP)
(74) Representative: Klunker . Schmitt-Nilson . Hirsch

(57) **Abstract**

A telescopic system with a display in a visual field is provided. In the telescopic system, a microcomputer is mounted on the circuit board of a display device and is configured so that the short-time pressing of an ENT key is detected. When the short-time pressing of the ENT key is detected, the orientation data on a liquid crystal display unit is set into a fixed display state in which the orientation data is fixed to the orientation data obtained at the time. At the same time, the display state of the liquid crystal display unit is switched to a blinking state or a state in which the color of the backlight unit is switched to a lighting color different from the lighting color in a real-time display state in which the orientation data being changed is displayed directly, by the microcomputer via a lighting drive circuit, whereby the distinction between the fixed display and the real-time display can be performed easily.

## Description

### Field of the Invention

The present invention relates to a telescope, such as a binocular telescope or a monocular telescope, a microscope or the like (hereinafter referred to as a "binocular telescope or the like," for magnifying an object to be observed, such as a landscape or a material body, more particularly, to a telescopic system with a display in a visual field, which has a function of displaying information, such as characters and figures, in the visual field of a binocular telescope or the like.

### Background of the Invention

A technology that incorporates a laser range finder in a binocular telescope or the like to measure the distance to an object to be observed, a technology that incorporates a receiver for an electronic compass or a GPS (Global Positioning System) to measure the direction in which a binocular telescope or the like is directed or to measure the current position, and a technology that incorporates a camera to image an object to be observed are known. In addition, a technology that incorporates a display device in a binocular telescope or the like to display information, such as obtained measurement data and images, in the visual field is also known. As this kind of display device, a device that uses a liquid crystal display device to carry out digital display has been proposed since the device is compact in size and low in power consumption and capable of obtaining high-resolution images (for example, refer to JP-A-2002-221670).

However, even with this kind of binocular telescope or the like that can carry out digital display in the visual field, apparatuses being satisfactory in operability, convenience, etc. are not necessarily proposed or put into practical use but are desired to be improved further under present circumstances.

For example, in an apparatus that displays an angle indicating the orientation of an object to be observed, in the visual field, after the orientation of the object is displayed, the orientation is deviated owing to hand movement or the like when eyes are turned to a map or the like placed at hand, whereby there is inconvenience of performing panning or the like again for the object in order to obtain accurate orientation.

Also, for example, there is a request for wishing to recognize not only the absolute orientation angle of an object to be observed but also the relative orientation angle between a first object to be observed and a second object to be observed, in the visual field by carrying out simple operation, and the technologies in the related art have not been able to respond to this kind of request.

### Summary of the Invention

In consideration of these circumstances, an object of an illustrative, non-limiting embodiment of the present invention is to provide a telescopic system with a display in a visual field, having a digital orientation display function and being excellent in operability and convenience. Also, the present invention is not required to respond the above-described requests, and an illustrative, non-limiting embodiment of the invention may solve a different problem or may not solve any problems.

### (First Aspect)

A telescopic system with a display in a visual field according to an illustrative, non-limiting embodiment of the present invention comprises:
an objective optical system for observing an object;
an ocular optical system;
an information display unit that displays information in a visual field of the ocular optical system;
a storage unit that stores the information; and
a display control unit, wherein when it is detected that a setting switch is in a first setting state, the display control unit sets the display of information on the information display unit to a real-time display state (that is, the display control unit sets the information display unit into a real-time display state) in which the information display unit displays information each time the information is obtained, an when it is detected that the setting switch is in a second setting state, the display control unit sets the display of information on the information display unit to a fixed display state (that is, the display control unit sets the information display unit into a fixed display state) in which the information display unit reads and fixedly displays the information stored in the storage unit.

In addition, it is preferable to have a configuration wherein the information is orientation angle information in relation to an orientation in which the telescopic system is directed, and the apparatus further comprises an orientation detection unit that detects the orientation and outputs the orientation angle information.

It may be possible to have a configuration wherein the apparatus further comprises a blinking display control unit that makes the information display unit to display the information in a blinking state when the information display unit is in the fixed display state of the information.

Furthermore, it is preferable to have a configuration wherein the information display unit has a backlight, and the apparatus further comprises a lighting color control unit that makes the backlight to light in a different color depending on whether the information display unit is in the fixed display state or the real-time display state.

Still further, it is preferable to have a configuration wherein the display control unit makes the storage unit to store the information when the information display unit is set into the fixed display state.

Still further, it is preferable to have a configuration wherein the storage unit is capable of storing the information regardless of whether power supply is present or not, and the apparatus comprises: a power supply control unit that detects a time from the start of power supply to the information display unit and forcibly turns off the power supply when an elapse of the time is detected; an information storage control unit, wherein when the power supply control unit detects the elapse of the time from the start of power supply to the information display unit while the information display unit fixedly displays the information, the information storage control unit makes the storage unit to store the information being fixedly displayed before the power supply is turned off by the power supply control unit; and a storage information display-control unit, wherein when the power supply to the information display unit is resumed, the storage information display-control unit makes an judgment whether the information fixedly displayed before the power supply was lately turned off is stored in the storage unit or not, and when the information stored in the storage unit is present, the storage information display-control unit makes the information display unit to fixedly display the information.

Still further, it is preferable to have a configuration wherein when the information storage control unit detects that the setting switch is set into the first setting state while the information display unit fixedly displays the information, the information storage control unit stores the information fixedly displayed in the storage unit, and when the power supply control unit detects that the setting switch is set into the first setting state while power supply is turned on, the power supply control unit forcibly turns off the power supply.

### (Second Aspect)

A telescopic system with a display in a visual field according to an illustrative, non-limiting embodiment of the present invention comprises:
an objective optical system for observing an object;
an ocular optical system;
an orientation detection unit that detects an orientation of the object and outputs a signal on the orientation;
an information display unit that displays an orientation angle of the object in a visual field of the ocular optical system on the basis of the signal from the orientation detection unit;
a storage unit that store data;
a reference orientation setting unit that detects whether a switch is set into a first setting state, wherein the first setting state is detected, the reference orientation setting unit makes the storage unit to store the orientation angle detected by the orientation detection unit as a reference orientation angle;
a relative orientation display-control unit that detects whether the switch is set into a second setting state after the reference orientation angle is stored in the storage unit by the reference orientation setting unit, wherein when the second setting state is detected, the relative orientation display-control unit subtracts the reference orientation angle stored in the storage unit from the orientation angle detected by the orientation detection unit to provide a subtraction value as a relative orientation angle, and the relative orientation display-control unit makes the information display unit to display the subtraction value.

It may be possible that the difference between the "first setting state" and the "second setting state" is, for example, the difference between a first pressing state and a second pressing state of the same pushbutton switch, in addition to the mutual difference between the setting positions or setting operations.

Furthermore, it is preferable to have a configuration wherein the relative orientation display-control unit has a blinking control unit that makes the information display unit to display the subtraction value in a blinking state.

Moreover, it may be possible to have a configuration wherein when the first setting state is detected, the relative orientation display-control unit forces the information display unit to display the orientation angle as being zero.

The telescopic system with a display in a visual field display according to an exemplary embodiment of the first aspect can fixedly display information, such as obtained orientation data, as desired by the user, for example; hence, the user can work efficiently without losing the obtained orientation or the like during work, for example, when an object to be observed is checked on a map or the like; the present invention can thus provide a telescopic system with a display in a visual field being excellent in operability and remarkably high in convenience.

Furthermore, when fixed display is performed, the content of the display is blinked, or the lighting color of the backlight is switched depending on whether the display is a real-time display or fixed display; hence, the user can identify very easily and immediately whether the display is a real-time display or fixed display; therefore, it is possible to securely prevent the user from making incorrect recognition and to make improvement in operability and convenience.

Still further, the orientation data being displayed when AUTO POWER OFF is activated is held thereinafter, and the orientation data is redisplayed after the power is turned on again; hence, unlike the apparatuses in the related art, it is possible to eliminate various inconveniences caused by the loss of the orientation data due to AUTO POWER OFF operation, to avoid redundant work, such as the readjustment of the orientation, and to attain improvement in operability and convenience. Moreover, it is possible to attain both low power consumption and high usability.

The telescopic system with a display in a visual field according to an exemplary embodiment of the second aspect is configured so as to be capable of displaying the relative orientation angle between two desired objects to be observed on the information display unit in the visual field by carrying out the simple operation of the switch, thereby being capable of carrying out relative orientation angle measurement quickly and accurately by simple operation; the present invention can thus provide a telescopic system with a display in a visual field being remarkably excellent in operability and high in convenience.

### Brief Description of the Drawings

Fig. 1 is a schematic view showing the configuration of a telescopic system with a display in a visual filed according to an illustrative, non-licniting embodiment of the present invention;
Fig. 2 is a magnified view of the display device shown in Fig. 1;
Fig. 3 is a view schematically exemplifying a state in a visual field;
Fig. 4 is a view showing a configuration example of the electric circuit portion of the display device;
Fig. 5 is a flowchart showing a first embodiment of display device operation control carried out by a microcomputer according to a first aspect of the present invention;
Fig. 6 is a block diagram showing the configurations of function units that are realized by the microcomputer to carry out the display device operation control shown in Fig. 5;
Fig. 7 is a flowchart showing a second embodiment of display device operation control carried out by the microcomputer according to a first aspect of the present invention;
Fig. 8 is a block diagram showing the configurations of function units that are realized by the microcomputer to carry out the display device operation control shown in Fig. 7;
Fig. 9 is a flowchart showing a third embodiment of display device operation control carried out by the microcomputer according to a first aspect of the present invention;
Fig. 10 is a flowchart showing the continuation of the display device operation control that is carried out by the microcomputer and shown in Fig. 9;
Fig. 11 is a block diagram showing the configurations of function units that are realized by the microcomputer to carry out the display device operation control shown in Figs. 9 and 10;
Fig. 12 is a flowchart showing a fourth embodiment of display device operation control carried out by the microcomputer according to a first aspect of the -present invention;
Fig. 13 is a flowchart showing the continuation of the display device operation control that is carried out by the microcomputer and shown in Fig. 12;
Fig. 14 is a flowchart showing a fourth embodiment of display device operation control carried out by the microcomputer according to a second aspect of the present invention; and
Fig. 15 is a block diagram showing the configurations of function units that are realized by the microcomputer to carry out the display device operation control shown in Fig. 14.

### Detailed Description of the Invention

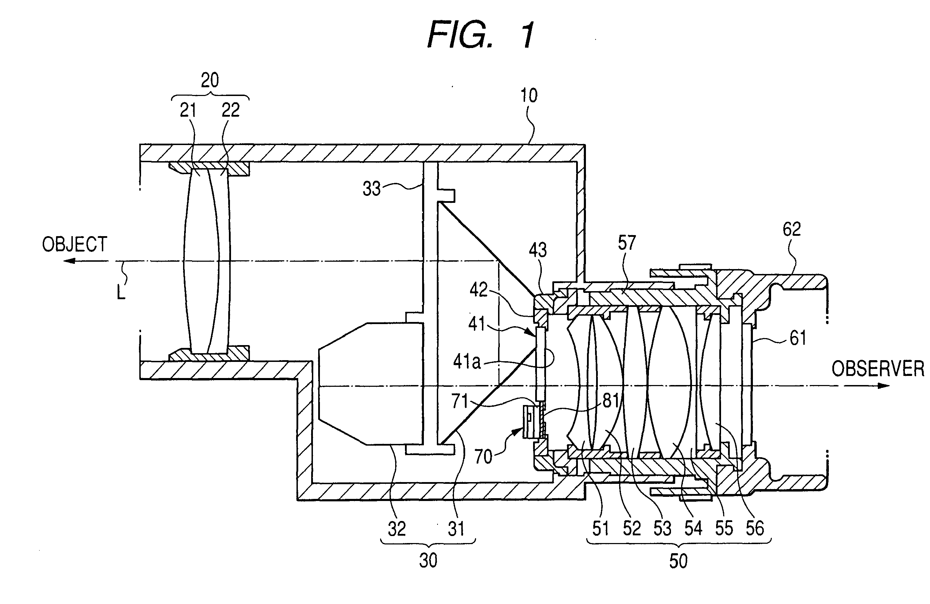

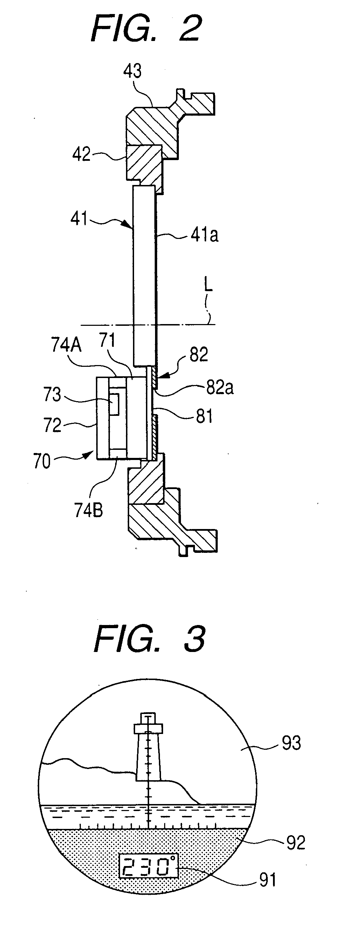

Exemplary embodiments according to the present invention will be described below with reference to the drawings. Fig. 1 is a schematic view showing the configuration of a telescopic system with a display in a visual field according to an exemplary embodiment of the present invention (hereinafter referred to as "the apparatus according to the embodiment"), Fig. 2 is a magnified view showing the configuration of the display device shown in Fig. 1, and Fig. 3 is a view schematically exemplifying a state in a visual field.

As shown in Fig. 1, in the apparatus according to the embodiment, inside the housing 10 thereof, an objective optical system 20 comprising two objective lens elements cemented to each other, a Porro prism 30 serving as an upright image forming unit and comprising two rectangular prisms 31 and 32, a reticle plate 41 disposed near the imaging surface position of the objective optical system 20, an ocular optical system 50 comprising six ocular lens elements 51 to 56, and a linear polarization filter 61 that converts unpolarized light into linearly-polarized light are disposed in this order along the optical axis L from the side of an object to be observed.

In addition, a display device 70 serving as an information display unit is disposed between the Porro prism 30 and the ocular optical system 50 at a position away from the optical axis L. The Porro prism 30 is held in the housing 10 via a prism holding member 33, and the reticle plate 41 and the display device 70 are held in the housing 10 via a reticle mirror chamber member 42 and a reticle mirror chamber holding member 43.

Furthermore, the ocular optical system 50 is held in the housing 10 via an ocular lens barrel 57, and the linear polarization filter 61 is held at the position on one side of the ocular optical system 50 and closest to the observer by an ocular member 62 installed on this ocular lens barrel 57. The linear polarization filter 61 held by the ocular member 62 is configured so as to be rotatable around the optical axis L, and the direction of the transmission axis thereof can be changed as desired by this rotation.

The apparatus according to the embodiment is obtained by applying the present invention to a binocular-type telescopic system, and Fig. 1 shows the configuration of the left barrel thereof. The configuration of the right barrel thereof, not shown, is basically the same as the configuration of the left barrel, except that the reticle plate 41 and the display device 70 are not provided.

As shown in Fig. 2, the display device 70 comprises a liquid crystal display unit 71, a circuit board 72 disposed on the rear side of this liquid crystal display unit 71 via spacers 74A and 74B, and a backlight unit 73 mounted on this circuit board 72.

On the front side of the liquid crystal display unit 71, a circular polarization filter 81 and a mask plate 82 having an opening 82a formed to have a size are disposed. The reticle plate 41 has a form obtained by cutting off a partial area of a circular optical glass plate, and the display device 70, the circular polarization filter 81 consisting of a quarter wavelength plate and the mask plate 82 are disposed in this cutoff area. Furthermore, the right face of the reticle plate 41 in the figure serves as a reticle face 41a on which a reticle (a cross-wire image in the visual field is shown in Fig.3), such as cross wires or scales inscribed on the cross wires, is formed, and the right face of the mask plate 82 in the figure is disposed so as to be approximately flush with this reticle face 41a.

With this configuration, as shown in Fig. 3, in the visual field of the observer (the area inside the circle in the figure), an information display area 91 in which the image displayed on the display device 70 and seen through the opening 82a can be seen via the circular polarization filter 81, a non-display area 92 that appears dark owing to light shielding by the mask plate 82, and an observation area 93 in which the image of an object to be observed can be observed are formed; hence, the observer can see the information, such as characters and figures, displayed by the display device 70 together with the magnified image of the object to be observed, within a part of the visual field, that is, outside the observation area 93. The apparatus according to the embodiment is equipped with a compass that is described in detail later, and orientation information is digitally displayed on the display device 70.

Furthermore, in the apparatus according to the embodiment, the display light from the display device 70 is converted from linear polarization into nearly circular polarization when the light passes through the circular polarization filter 81, and the light reaches the linear polarization filter 61. For this reason, no matter which direction the transmission axis of the linear polarization filter 61 is set, the display light is not significantly reduced by the linear polarization filter 61, whereby the information displayed in the partial area in the visual field can be seen brightly at all times by the display device 70.

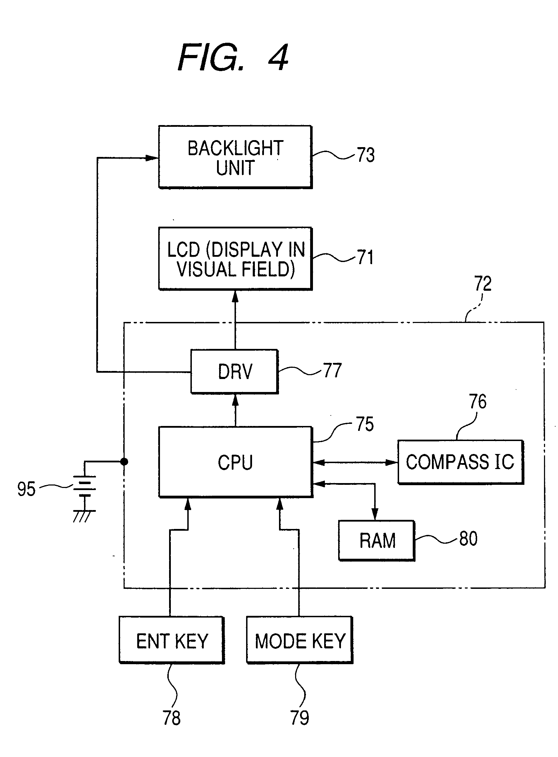

Next, a configuration example of an electric circuit portion that controls the operation of the display device 70 will be described with reference to Fig. 4.

As described above, the display device 70 comprises the liquid crystal display unit 71, the circuit board 72 and the backlight unit 73; the circuit board 72 is provided with a microcomputer (CPU) 75, a compass IC 76 and a lighting drive circuit 77, and further provided with other circuits, not shown, such as a circuit that controls the supply of a power source voltage.

The microcomputer 75 has a configuration that is publicly known and well known, and controls various operations regarding display as described later and computes orientation angles on the basis of data from the compass IC 76. A main power source 95 is connected to this microcomputer 75; when an ENT key 78 described later is set into a pressing state, the voltage of the power source is begun to be supplied to the microcomputer 75 and other circuit portion. In addition, a nonvolatile memory (designated by "RAM" for the sake of convenience in Fig. 4) 80 serving as a storage unit that stores various data even after the power supply from the main power source 95 is stopped is connected to the microcomputer 75. This nonvolatile memory 80 can write and read data as desired, and can hold data even after the power supply from the main power source 95 is turned off; more specifically, a flash memory or the like can be used, for example.

It may be possible to have a configuration in which an ordinary semiconductor memory is used instead of the nonvolatile memory 80, and a backup power source is connected to this memory so that data can be held even after the power supply from the main power source 95 is turned off.

In addition, an ENT key (enter key) 78 and a MODE key (mode key) 79 provided at appropriate positions on the housing 10 are connected to the microcomputer 75; in particular, the pressing state of the ENT key 78 is detected as described later and is used for the supply of the power source voltage and the control of display states, for example. Although the MODE key 79 is used for changing the operation mode and other operations depending on the pressed state thereof, the key is not an essential switch in the first to fourth operation control examples, described later, of the display device 70 by the microcomputer 75.

The compass IC 76 is a circuit in which circuits for generating orientation information are integrated. As this kind of IC, an IC by a magnetic sensor, for example, is known. More specifically, for example, a compass IC that uses the MI effect (magneto-impedance effect) of an amorphous material, superior to products of the related art in high sensitivity, compact size, ease of downsizing, etc., and used frequently in recent years is preferable.

The output signal from the compass IC 76 is processed by an orientation data computation processing program stored beforehand in the microcomputer 75, converted into digital orientation data, and supplied to the lighting drive circuit 77, whereby the orientation detected by the liquid crystal display unit 71 is displayed digitally. Generally speaking, the orientation data computation processing program is provided, for example, from the manufacturer of the compass IC 76, and it is preferable to use this.

The lighting drive circuit (designated by "DRV" for the sake of convenience in Fig. 4) 77 outputs a drive signal required to display the digital orientation data from the microcomputer 75 on the liquid crystal display unit 71 to the liquid crystal display unit 71, and also outputs a drive signal required to light the backlight unit 73. The backlight unit 73 is a combination of a backlight (not shown) and electronic components required to light the backlight in a unit form; in the apparatus according to the embodiment, the lighting color thereof can be switched between at least two colors by the control of the microcomputer 75 as described later.

### (First Aspect)

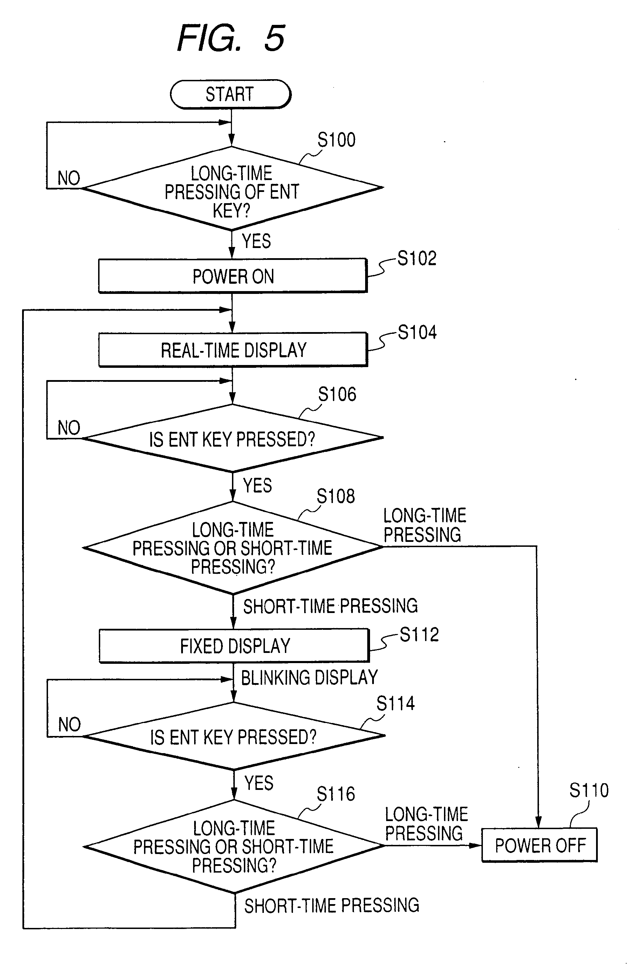

Next, in this configuration, a first embodiment of the operation control of the display device 70 according to the first aspect of the present invention, carried out by the microcomputer 75, will be described with reference to the flowchart shown in Fig. 5.

This first embodiment is intended to realize the function of switching the display state of the liquid crystal display unit 71; first, when the ENT key 78 is set into a state of being pressed for a long time by the user (a first pressing state), a "POWER ON" state is obtained, namely, the voltage of the main power source 95 is supplied to the circuit board 72, the liquid crystal display unit 71 and the backlight unit 73 (refer to steps S 100 and S 102 in Fig. 5).

It is preferable that the distinction between "long-time pressing" and "short-time pressing" should be performed depending on whether the time during which the switch is pressed is long or short. More specifically, it is considered that a standard can be established in which when the switch pressing time detected by the microcomputer 75 is equal to or less than one second, for example, the pressing is judged to be "short-time pressing," and when the time is more than one second, the pressing is judged to be "long-time pressing;" however, the setting of the time is not required to be limited to such a specific value as a matter of course.

When the power supply starts, the orientation data from the compass IC 76 is captured in the microcomputer 75, computed and output to the lighting drive circuit 77 in a signal form so as to be displayed digitally on the liquid crystal display unit 71. Then, the lighting drive circuit 77 drives the liquid crystal display unit 71 on the basis of the signal input from the microcomputer 75; as a result, the orientation of the apparatus according to the embodiment being directed to the object to be observed (refer to Fig. 1) at this time is displayed in real time (refer to step S 104 in Fig. 5). Namely, the real-time display is a display state in which the orientation changing momentarily each time the apparatus according to the embodiment is panned in the direction of the orientation is directly displayed on the liquid crystal display unit 71.

Next, the microcomputer 75 is set into a state of detecting the pressing of the ENT key 78 (refer to step S106 in Fig. 5); when it is judged that the ENT key 78 is pressed, a judgment is made as to whether the key is pressed for a long time or a short time (refer to step S108 in Fig. 5); when it is judged that the ENT key 78 is pressed for a long time, the power supply from the main power source 95 to the circuit board 72 and other units is turned off (POWER OFF), and the display function of the liquid crystal display unit 71 is stopped (refer to step S110 in Fig. 5). On the other hand, when it is judged that the ENT key 78 is pressed for a short time (a second pressing state), the orientation display on the liquid crystal display unit 71 is set into a fixed display state (refer to step S 112 in Fig. 5). Namely, when the ENT key 78 is pressed for a short time, the orientation data obtained at this time is stored in the memory 80 (or the memory area in the microcomputer 75). Concurrently, the stored orientation data is read from the memory 80 by the microcomputer 75, and the display is held in the state displayed on the liquid crystal display unit 71 via the lighting drive circuit 77; hence, even if the apparatus according to the embodiment is panned in the direction of the orientation, the orientation detected at the time of the short-time pressing of the ENT key 78 is displayed continuously on the liquid crystal display unit 71.

In this example of operation control, the orientation data obtained at the time of the short-time pressing of the ENT key 78 at step S108 is stored in the memory 80 or the memory area in the microcomputer 75, and the stored data is displayed fixedly on the liquid crystal display unit 71; however, it may be possible that the orientation data stored beforehand in the memory 80 or the memory area in the microcomputer 75 is read and displayed fixedly, by carrying out the short-time pressing of the ENT key 78 multiple times continuously, for example. In this case, it may also be possible to have a configuration in which multiple pieces of orientation data, different in memorization time (storage time), can be stored in the memory 80 or the memory area in the microcomputer 75, the memorization time of the orientation data to be read is made different depending on the number of a set of continuous short-time pressing operations performed once, and fixed display is carried out, for example.

This kind of fixed display function for orientations is very convenient, for example, after the orientation of an object to be observed is displayed and when the user turns his eyes from the apparatus according to the embodiment to a map or the like placed at hand to check the position of the object to be observed on the map, for example. Namely, in the apparatus in the related art, because the attention of the user is focused on the map, the orientation is deviated when his hand holding the binocular telescope or the like shakes, and the binocular telescope or the like must be panned again to the object to be observed in order to obtain the accurate orientation; furthermore, in order to avoid such an inconvenience, the user must accurately store the orientation when he turns his eyes away from the binocular telescope or the like, for example, thereby adding another inconvenience. On the other hand, in the apparatus according to the embodiment, the fixed display described above is performed; hence, even when the apparatus according to the embodiment is deviated from the object to be observed in order to check the object to be observed on a map or the like, the orientation of the object to be observed is not lost, and checking work or the like can be carried out efficiently, whereby a function having remarkably high convenience is provided.

At the time of the fixed display of the orientation, it is preferable that the display should be set into a blinking state so that the user can easily recognize that the display state is the fixed display state. More specifically, for example, in the display example on the liquid crystal display unit 71 shown in Fig. 3, it may be possible that all or part (one digit) of numeric value "230" should be set into a blinking state. Furthermore, it may also be possible that the orientation data and specific characters other than numerals are displayed alternately. For example, in the display example shown in Fig. 3, it may be possible that "230" and "---" are displayed alternately. Still further, it is also preferable that the orientation data and character P indicating the fixed display state should be displayed alternately. The method of blinking is not limited to these as a matter of course, but should be selected as necessary.

After the liquid crystal display unit 71 has been set again to the fixed display state (refer to step S112 in Fig. 5), the state of the processing is set into the state of detecting whether the ENT key 78 is pressed or not (refer to step S114 in Fig. 5); when it is judged that the ENT key 78 is pressed, a judgment is made as to whether the ENT key 78 is pressed for a long time or a short time (refer to step S 116 in Fig. 5). When it is judged that the ENT key 78 is pressed for a long time, the processing advances to step S110 described above; on the other hand, when it is judged that the ENT key 78 is pressed for a short time, the processing returns to the real-time display state (refer to step S 104 in Fig. 5), and hereinafter, the microcomputer is set into the state of detecting whether the ENT key 78 is pressed or not (refer to step S106 in Fig. 5). The nonvolatile memory 80 described above with reference to Fig. 4 is not necessarily essential for realizing this kind of function.

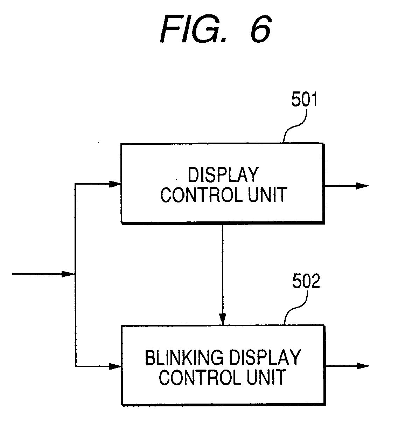

For the above-mentioned control for switching the display state of the liquid crystal display unit 71 by the microcomputer 75, it is considered that the microcomputer 75 is provided with a display control unit 501 and a blinking display control unit 502 by software as shown in Fig. 6.

Namely, when the ENT key 78 is pressed for a long time, the display control unit 501 starts the supply of the power source voltage to the circuits, and carries out the processing of steps S100, S102 and S104 described with reference to Fig. 5 so that the display on the liquid crystal display unit 71 is set into the real-time display state; on the other hand, when the ENT key 78 is pressed for a short time in the real-time display state, the display control unit 501 carries out the processing of steps S 106, S108 and S112 described with reference to Fig. 5 so that the display on the liquid crystal display unit 71 is set into the fixed display state. In addition, when the fixed display is performed on the liquid crystal display unit 71, the blinking display control unit 502 carries out the function of blinking the display; in Fig. 5, it is regarded that the function is included in the processing of step S112, and the description of which as an independent step is omitted.

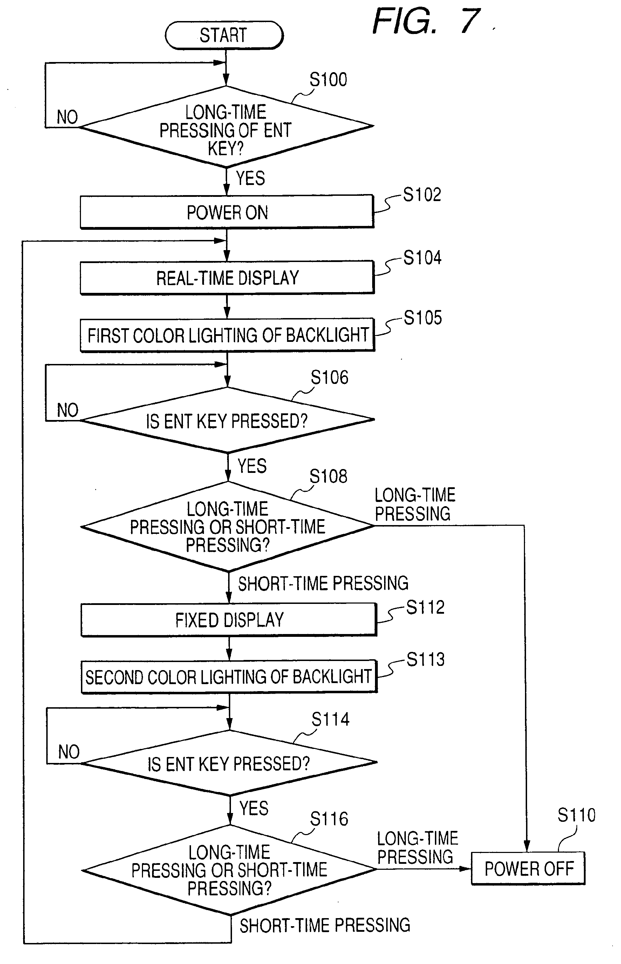

Next, a second embodiment of the operation control of the display device 70, carried out by the microcomputer 75, will be described with reference to the flowchart shown in Fig. 7. The steps at which the same processing as that in the flowchart shown in Fig. 5 are designated by the same step numbers as those used in Fig. 5, and their detailed descriptions are omitted; differences will thus be mainly described below.

In addition to the function of switching the display state of the liquid crystal display unit 71 according to the first embodiment, this second embodiment is intended to realize the function of switching the lighting color of the backlight; the processing from step S100 to step S104 is the same as the processing described with reference to Fig. 5. Concurrently with the time when the liquid crystal display unit 71 is set into the real-time display state, the lighting color of the backlight unit 73 is set into a first lighting color that is set beforehand (refer to step S105 in Fig. 7). Although the first lighting color is not required to be limited to a specific color, it is set into red, for example, in the embodiment.

The processing of steps S106 and S108 is then carried out; concurrently with the time when the liquid crystal display unit 71 is set into the fixed display state, the lighting color of the backlight unit 73 is switched to a second- lighting color (for example, blue) (refer to step S113 in Fig. 7). By the switching of the color of the backlight depending on the orientation display state on the liquid crystal display unit 71 as described above, the user can recognize immediately and securely whether the display on the liquid crystal display unit 71 is a real-time display or fixed display, whereby further improvement in convenience is attained.

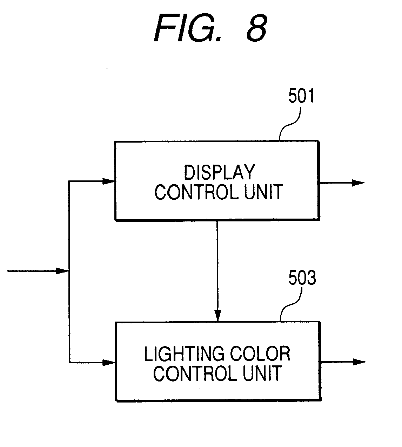

For the above-mentioned control for switching the display state of the liquid crystal display unit 71 and the above-mentioned control for switching the lighting color of the backlight, it is considered that the microcomputer 75 is provided with the display control unit 501 and a lighting color control unit 503 by software as shown in Fig. 8.

Namely, when the ENT key 78 is pressed for a long time, the real-time display control unit 501 starts the supply of the power source voltage to the circuits, and carries out the processing of steps S 100, S102 and S 104 in Fig. 7 so that the display on the liquid crystal display unit 71 is set into the real-time display state; on the other hand, when the ENT key 78 is pressed for a short time in the real-time display state, the real-time display control unit 501 carries out the processing of steps S106, S108 and S112 in Fig. 7 so that the display on the liquid crystal display unit 71 is set into the fixed display state. In addition, the lighting color control unit 503 carries out the processing of steps S105 and S113 described with reference to Fig. 7 to switch the lighting color of the backlight unit 73.

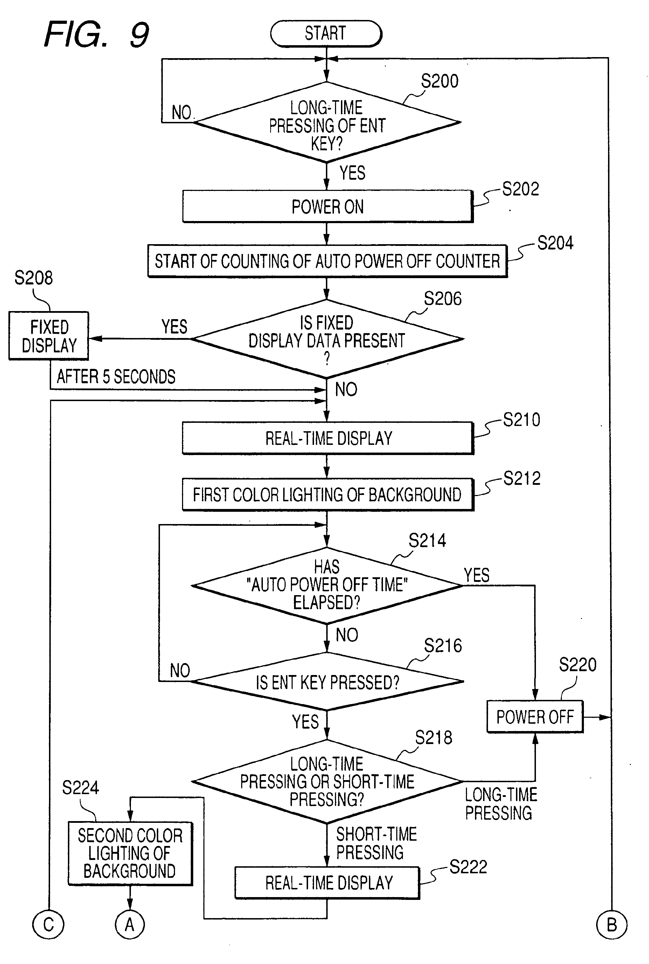

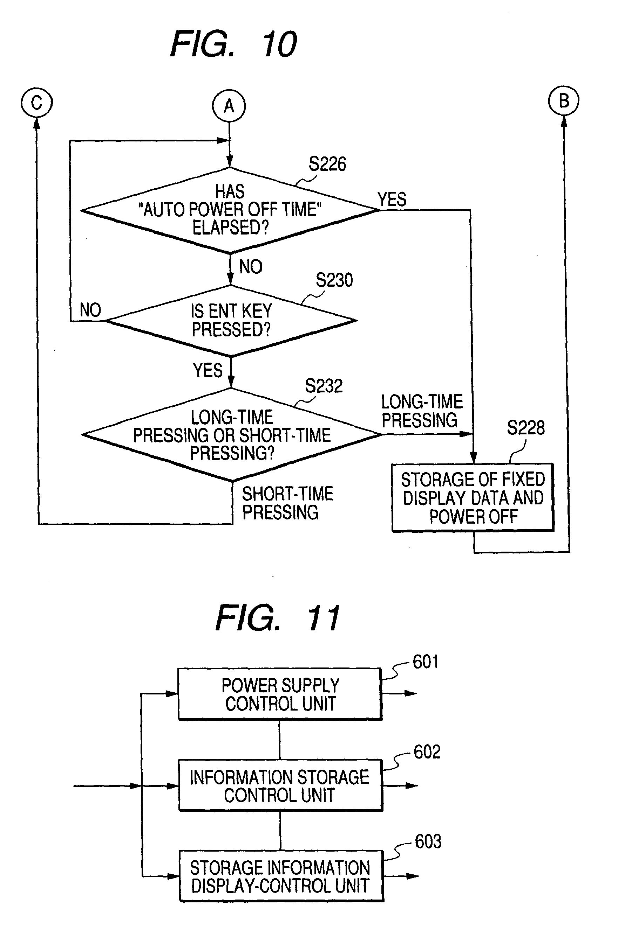

Next, a third embodiment of the operation control of the display device 70, carried out by the microcomputer 75, will be described with reference to the flowcharts shown in Figs. 9 and 10.

In addition to the above-mentioned function of switching the display state of the liquid crystal display unit 71 and the above-mentioned function of switching the lighting color of the backlight, this third embodiment is intended to realize the function of holding orientation data and the function of redisplaying stored orientation data.

First, when the ENT key 78 is set into a state of being pressed for a long time by the user, "POWER ON" state is obtained, namely, the voltage of the main power source 95 is supplied to the circuit board 72, the liquid crystal display unit 71 and the backlight unit 73 (refer to steps S200 and S202 in Fig. 9).

Next, an auto power off counter starts counting (refer to step S204 in Fig. 9). Namely, in the embodiment, a function (AUTO POWER OFF) of automatically turning off the power supply after a time has elapsed from the start of the power supply (POWER ON) is realized; hence, the time having elapsed from "POWER ON" is counted by software processing.

Next, when the power is turned off (power supply off) while fixed display is performed, a judgment is made as to whether orientation data stored and held is held in -the nonvolatile memory 80 or not (refer to step S206 in Fig. 9). When it is judged that orientation data is present in the nonvolatile memory 80, the orientation data is read in the microcomputer 75 and displayed fixedly on the liquid crystal display unit 71 for a time (for example, 5 seconds) (refer to step S208 in Fig. 9), and then the display is shifted to the real-time display state (refer to step S210 in Fig. 9). The meanings of the fixed display and the real-time display are the same as those in the first embodiment described above with reference to Fig. 5.

On the other hand, when it is judged at step S206 that no orientation data is stored in the nonvolatile memory 80, real-time display is performed (refer to steps S206 and S210 in Fig. 9). The lighting color of the backlight unit 73 is set into the first lighting color having been set beforehand (refer to step S212 in Fig. 9). Because the processing of step S212 is substantially the same as the processing of step S105 in Fig. 7, its detailed description is omitted here.

After the real-time display is performed as described above, a judgment is made as to whether the count value of the auto power off counter has reached a value or not, that is, as to whether a time has elapsed or not (refer to step S214 in Fig. 9); when it is judged that the time has elapsed, the power supply from the main power source 95 to the various units is turned off (refer to step S220 in Fig. 9).

On the other hand, when it is judged at step S214 that the time has not yet elapsed, the state of the processing is set into the state of detecting whether the ENT key 78 is pressed or not (refer to step S216 in Fig. 9); when it is judged that the ENT key 78 is pressed, a judgment is made as to whether the ENT key 78 is pressed for a long time or a short time (refer to step S218 in Fig. 9).

When it is judged that the ENT key 78 is pressed for a long time, the power supply from the main power source 95 to the circuit board 72 and other units is turned off (POWER OFF), and the display function of the liquid crystal display unit 71 is stopped (refer to step S220 in Fig. 9). On the other hand, when it is judged that the ENT key 78 is pressed for a short time, the orientation display on the liquid crystal display unit 71 is shifted to the fixed display state (refer to step S222 in Fig. 9), and the lighting color of the backlight unit 73 is switched to the second lighting color (for example, blue) (refer to step S224 in Fig. 9).

Next, a judgment is made as to whether the count value of the auto power off counter has reached the value or not, that is, as to whether the time has elapsed or not (refer to step S226 in Fig. 10); when it is judged that the time has elapsed, the orientation being displayed fixedly at this time is stored in the nonvolatile memory 80, and the power supply from the main power source 95 to the various units is turned off (refer to step S228 in Fig. 10).

On the other hand, when it is judged at step S226 that the time has not yet elapsed, the microcomputer is set into the state of detecting whether the ENT key 78 is pressed or not (refer to step S230 in Fig. 10); when it is judged that the ENT key 78 is pressed, a judgment is made as to whether the ENT key 78 is pressed for a long time or a short time (refer to step S223 in Fig. 10),

When it is judged that the ENT key 78 is pressed for a long time, the processing of step S228 described above is carried out; on the other hand, when it is judged that the ENT key 78 is pressed for a short time, the display returns to the real-time display state (refer to step S210 in Fig. 9), the lighting color of the backlight unit 73 is switched to the first lighting color (refer to step S212 in Fig. 9), and the state of the processing is set into the judgment state of detecting the end of the auto power off function (refer to step S212 in Fig. 9). When the auto power off function is ended, that is, when it is judged that the count value of the auto power off counter has reached the value (the time), the processing of step S220 described above is carried out, and the orientation display on the liquid crystal display unit 71 is ended.

In the third embodiment, when the orientation display is ended by forcibly turning off the power supply by the auto power off function as described above, the orientation data at the time when the display is ended is held even after the power supply is turned off; when the power source is turned on hereinafter, and when the display operation is resumed, the orientation being displayed fixedly immediately before the power off is displayed again for a time; hence, this configuration is very convenient when the orientation displayed fixedly is checked on a map or the like. Namely, for example, when the orientation display of an object to be observed is obtained by a related art binocular telescope with an auto power off function and when the orientation or the like of the object to be observed is checked on a map, the checking work takes time, the auto power off function is activated, and the power is turned off, whereby the orientation data is all lost; hence, when the checking work is not completed, for example, it is necessary to turn on the power, to perform orientation alignment by directing the binocular telescope or the like to the object to be observed and to perform display again. On the other hand, in the apparatus according to the present embodiment, even if the auto power off function is activated in the middle of the above-mentioned checking work or the like, the orientation displayed before the power supply was lately turned off is displayed again when the power is turned on again; hence, it is possible to avoid extra work required conventionally, such as the work for performing orientation alignment by directing the binocular telescope or the like to the object to be observed and for performing display again; therefore, efficient checking work can be carried out.

For the above-mentioned control for holding the orientation data and the above-mentioned control for redisplaying the fixed display data stored, it is considered that the microcomputer 75 is provided with a power supply control unit 601, an information storage control unit 602 and a storage information display-control unit 603 by software as shown in Fig. 11.

Namely, the power supply control unit 601 carries out the processing of steps S214, S218 and S220 described with reference to Fig. 9 and the processing of steps S226, S232 and S228 described with reference to Fig. 10 to turn off power supply when the count value of the auto power off counter has reached the value or when the ENT key 78 is pressed for a long time. In addition, the information storage control unit 602 carries out the processing of step S229 described with reference to.Fig. 10 to store and store the orientation data displayed fixedly at the time of POWER OFF. Furthermore, when there is orientation data stored immediately after POWER ON, the storage information display-control unit 603 carries out the processing of steps S206 and S208 described with reference to Fig. 9 to fixedly display the orientation data for a time.

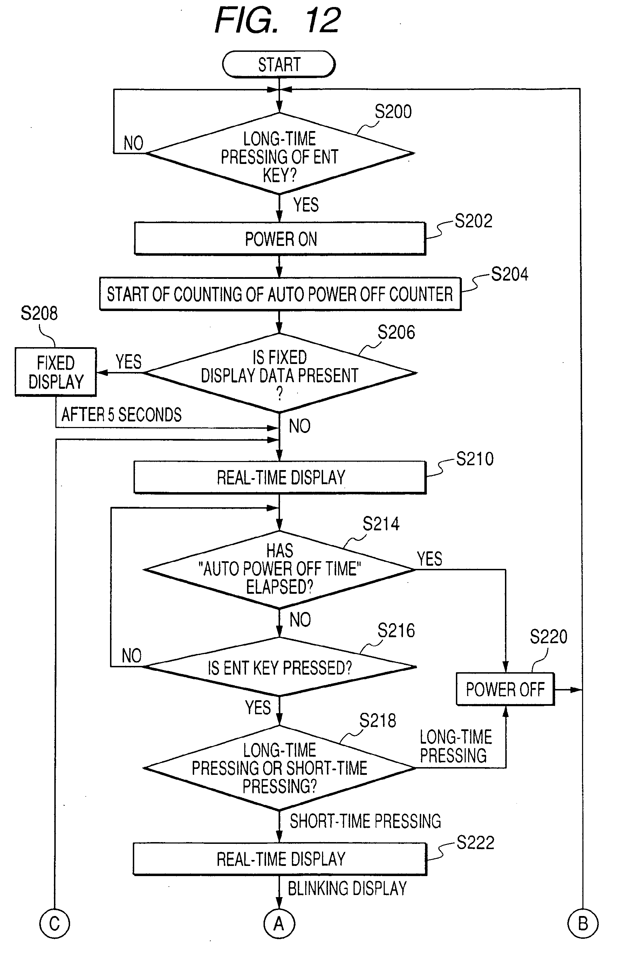

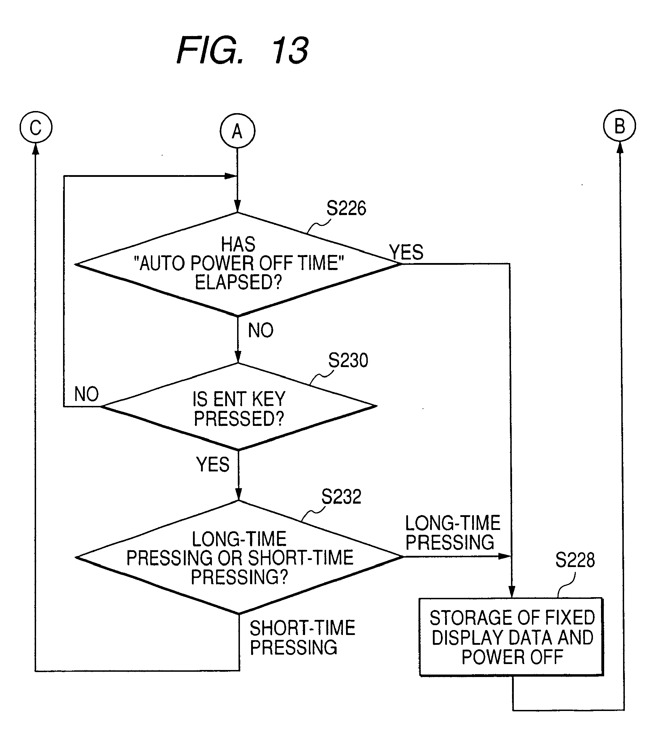

Next, a fourth embodiment of the operation control of the display device 70, carried out by the microcomputer 75, will be described with reference to the flowcharts shown in Figs. 12 and 13. The steps at which the same processing as that in the flowcharts shown in Figs. 9 and 10 are designated by the same step numbers as those used in Figs. 9 and 10, and their detailed descriptions are omitted; differences will thus be mainly described below.

This fourth embodiment is similar to the third embodiment described above in that the function of holding orientation data and the function of redisplaying stored orientation data are realized, but different from the third embodiment in that blinking display is performed at the time of fixed display, instead of the function of switching the lighting color of the backlight.

Namely, in the fourth embodiment, the orientation display on the liquid crystal display unit 71 is set into the fixed display state by the short-time pressing of the ENT key 78 and set into the blinking state being set beforehand as described above at step S112 in Fig. 5 (refer to step S222 in Fig. 12). Since other processing is basically the same as that described above with reference to Figs. 9 and 10, the detailed descriptions thereof are herein omitted. Furthermore, in the fourth embodiment, the function units being formed by software in the microcomputer 75 are basically the same as those shown above in Figs. 6 and 11, and the detailed descriptions thereof are herein omitted.

The telescopic system with a display in a visual field according to the first aspect of the present invention is not limited to the above-mentioned embodiments, but can be modified so as to have other various forms. For example, the setting form of the setting switch is not limited to the pressing state of the pushbutton switch, but is applicable to the slide state of a slide switch, the rotation state of a rotary switch, etc. Furthermore, the information to be displayed on the information display unit is not limited to the information on the angle of orientation, but is applicable to various kinds of information, such as the angle of depression, altitude and temperature.

In the above-mentioned embodiments, the display that identifies whether the current display is real-time display or fixed display is performed on the liquid crystal display (LCD) unit 71 that displays orientations; however, instead of this, it is possible to have a configuration in which a display unit different from the liquid crystal display unit 71 that displays orientations is provided separately in the visual field, and the display for the identification is performed on this display unit.

### (Second Aspect)

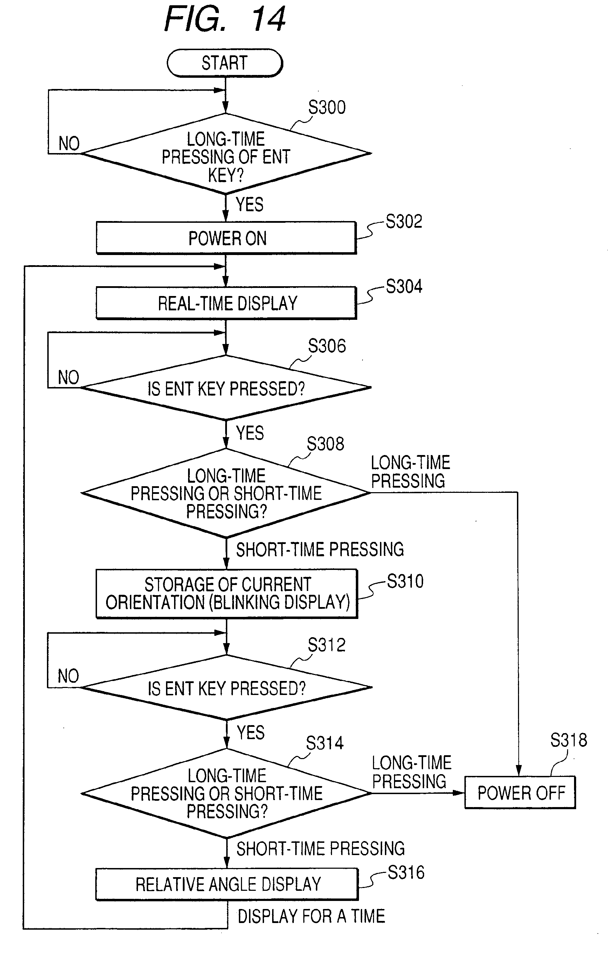

Next, in this configuration, an exemplary embodiment of the operation control of the display device 70 according to the second aspect of the present invention, carried out by the microcomputer 75, will be described with reference to the flowchart shown in Fig. 14.

The operation control of the display device 70 by the microcomputer 75 is intended to realize the function of measuring the relative orientation angle between two objects to be observed.

This will be described below specifically; first, when the ENT key 78 is set into a state of being pressed for a long time by the user (a second pressing state), a "POWER ON" state is obtained, namely, the voltage of the main power source 95 is supplied to the circuit board 72, the liquid crystal display unit 71 and the backlight unit 73 (refer to steps S300 and S302).

It is preferable that the distinction between "long-time pressing" and "short-time pressing" should be performed depending on whether the time during which the switch is pressed is long or short. More specifically, it is considered that a standard can be established in which when the switch pressing time detected by the microcomputer 75 is equal to or less than one second, for example, the pressing is judged to be "short-time pressing," and when the time is more than one second, the pressing is judged to be "long-time pressing;" however, the setting of the time is not required to be limited to such a specific value as a matter of course.

When the power supply starts, the orientation data from the compass IC 76 is captured in the microcomputer 75 and computed, and the result of the computation is output to the lighting drive circuit 77 in a signal form so as to be displayed digitally on the liquid crystal display unit 71. Then, the lighting drive circuit 77 drives the liquid crystal display unit 71 on the basis of the signal input from the microcomputer 75; as a result, the orientation of the apparatus according to the embodiment being directed to the object to be observed at this time is displayed in real time (refer to step S304). Namely, the real-time display is a display state in which the orientation changing momentarily each time the apparatus according to the embodiment is panned in the direction of the orientation is directly displayed on the liquid crystal display unit 71.

Next, the microcomputer 75 is set into a state of detecting the pressing of the ENT key 78 (refer to step S306); when it is judged that the ENT key 78 is pressed, a judgment is made as to whether the key is pressed for a long time or a short time (refer to step S308); when it is judged that the ENT key 78 is pressed for a long time, the power supply from the main power source 95 to the circuit board 72 and other units is turned off (POWER OFF), and the display function of the liquid crystal display unit 71 is stopped (refer to step S318).

On the other hand, when it is judged at step S308 that the ENT key 78 is pressed for a short time (a first pressing state), the orientation displayed on the liquid crystal display unit 71 is stored in the memory 80, and concurrently with this, the orientation on the liquid crystal display unit 71 is displayed in a blinking state by the microcomputer 75 via the lighting drive circuit 77 (refer to step S310).

As a more specific example of the blinking state, for example, in the display example on the liquid crystal display unit 71 shown in Fig. 3, it may be possible that all or part (one digit) of numeric value "230" should be set into a blinking state. Furthermore, it may also be possible that the orientation data and specific characters other than numerals are displayed alternately. For example, in the display example shown in Fig. 3, it may also be possible that "230" and "---" are displayed alternately. The method of blinking is not limited to these as a matter of course, but should be selected as necessary.

Furthermore, it is preferable that the display on the liquid crystal display unit 71 should be forcibly set into zero and to the blinking state at step S310.

Moreover, the orientation data stored in the memory 80 is herein the start point of relative orientation angle measurement, that is, the reference point (or the reference orientation angle) thereof. Still further, the blinking display at step S310 is performed to inform the user that the apparatus according to the embodiment has been set into the measurement start state of the relative orientation angle.

In this state, the user pans the apparatus according to the embodiment in the direction of the orientation to an object to be observed, the relative orientation angle of which from the above-mentioned reference point is desired to be measured.

At the time of this panning, the state of the apparatus according to the embodiment is set into the state of detecting whether the ENT key 78 is pressed or not (refer to step S312); when it is judged that the ENT key 78 is pressed, a judgment is made as to whether the ENT key 78 is pressed for a long time or a short time (refer to step S314). When it is judged that the ENT key 78 is pressed for a long time, the processing advances to step S118 described above. On the other hand, when it is judged that the ENT key 78 is pressed for a short time at step S314, the orientation angle stored before as the reference orientation angle in the memory 80 is read, and the difference between the reference orientation angle and the orientation at the time when the short-time pressing of the ENT key 78 is detected at step S314 is computed as the reference orientation angle, and the reference orientation angle is displayed for a time (for example, approximately 10 seconds) on the liquid crystal display unit 71 (refer to -step S316).

Namely, after the reference point of the relative orientation angle measurement is determined (refer to step S310), the user carries out panning and presses the ENT key 78 for a short time when the object to be observed, the relative orientation angle of which is desired to be measured, is captured in the visual field (refer to Fig. 3); hence, the difference between the reference orientation angle and the orientation angle obtained at the time of the short-time pressing of the ENT key 78 is computed and displayed on the_liquid crystal display unit 71 as the relative orientation angle between the two objects to be observed.

Then, after this, the processing returns to the real-time display state (refer to step S304), and then the state of the processing is set again to the state of detecting whether the ENT key 78 is pressed or not (refer to step S306).

In the related art, when the measurement of this kind of relative orientation is attempted, the reference orientation angle of an object to be observed is checked, written down or stored by the user, the apparatus is panned to the object to be observed, the relative orientation of which is obtained, the orientation angle thereof is checked, and the orientation angle is subtracted from the reference orientation angle to obtain the relative orientation; this method is generally used.

On the other hand, in the apparatus according to the embodiment, the relative orientation angle can be obtained immediately by the simple operation of the ENT key 78 as described above, and a telescopic system being high in operability and convenience is provided; hence, it is possible to attain not only the measurement of the relative orientation angle but also improvement in the efficiency of work related thereto.

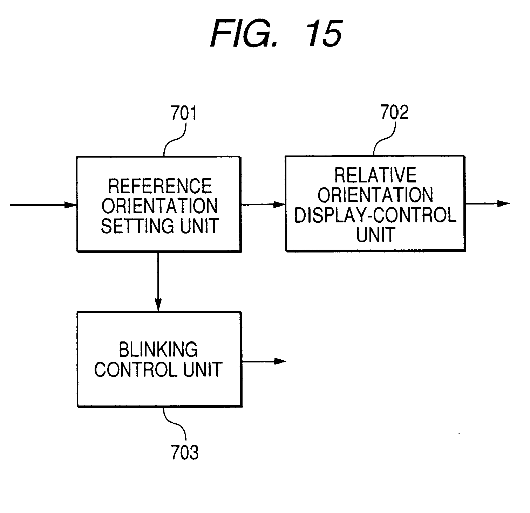

For the above-mentioned operation control for the display device 70 by the microcomputer 75, it is considered that the microcomputer 75 is provided with a reference orientation setting unit 701, a relative orientation display-control unit 702 and a blinking control unit 703 by software as shown in Fig. 15.

Namely, the reference orientation setting unit 701 carries out the processing of steps S306, S308 and S310 described in Fig. 14 so that when the ENT key 78 is pressed for a short time, the orientation angle obtained at that time is stored in the memory 80. In addition, the relative orientation display-control unit 702 carries out the processing of steps S312, S3I4 and S316 described in Fig. 14 so that after the short-time pressing of the ENT key 78 is performed and the orientation angle obtained at that time is stored in the memory 80 by reference orientation setting unit 501, the relative orientation angle is displayed when the short-time pressing of the ENT key 78 is detected. Furthermore, the blinking control unit 703 sets the liquid crystal display unit 71 to a blinking state when the orientation angle is stored in the memory 80 by the reference orientation setting unit 701, that is, when the processing of step S310 is carried out.

In the end, the procedure for relative orientation angle measurement by the apparatus according to the embodiment will be generally described.

First, it is assumed that the ENT key 78 is pressed for a long time and that the apparatus according to the embodiment is in the real-time display state (refer to step S304). In this state, the apparatus according to the embodiment is directed to a first target among two targets, the relative orientation angle of which is measured, and the first target is captured in the visual field of the apparatus according to the embodiment. Then, the ENT key 78 is pressed for a short time, and the state of the processing is set into the relative orientation angle measurement state (refer to steps S308 and S310).

In this state, the apparatus according to the embodiment is directed to a second target and captures the second target; when the ENT key 78 is pressed again for a short time, the relative orientation angle between the first target and the second target is displayed on the information display area 91 for a time, and the work for measuring the relative orientation angle can be ended.

The telescopic system with a display in visual field according to the second aspect of the present invention is not limited to the above-mentioned embodiments, but can be modified so as to have other various forms. For example, the setting form of the setting switch is not limited to the pressing state of the pushbutton switch, but is applicable to the slide state of a slide switch, the rotation state of a rotary switch, etc.

While the invention has been described in detail and with reference to specific embodiments thereof, it will be apparent to one skilled in the art that various changes and modifications can be made therein without departing from the spirit and scope thereof.

The present application claims foreign priority based on Japanese Patent Application Nos. JP2005-17636 and JP2005-17637, both filed January 26 of 2005, the contents of which is incorporated herein by reference.

## Claims

1. A telescopic system comprising:
an objective optical system for observing an object;
an ocular optical system;
an information display unit that displays information in a visual field of the ocular optical system;
a storage unit that stores the information; and
a display control unit, wherein when it is detected that a setting switch is in a first setting state, the display control unit sets the information display unit into a real-time display state in which the information display unit displays information each time the information is obtained, an when it is detected that the setting switch is in a second setting state, the display control unit sets the information display unit into a fixed display state in which the information display unit reads and fixedly displays the information stored in the storage unit.

2. The telescopic system according to claim 1, wherein the information is orientation angle information in relation to an orientation of the object, and the -telescopic system comprises an orientation detection unit that detects the orientation of the object and outputs the orientation angle information.

3. The telescopic system according to claim 1, which comprises a blinking display control unit that makes the information display unit to display the information in a blinking state when the information display unit is in the fixed display state.

4. The telescopic system according to claim 1, wherein the information display unit has a backlight, and the telescopic system comprises a lighting color control unit that makes the backlight to light in a different color depending on whether the information display unit is in the fixed display state or the real-time display state.

5. The telescopic system according to claim 1, wherein the display control unit makes the storage unit to store the information when the information display unit is set into the fixed display state.

6. The telescopic system according to claim 1, wherein the storage unit is capable of storing the information regardless of power supply, and the telescopic system comprises:
a power supply control unit that detects a time from the start of power supply to the information display unit and forcibly turns off the power supply when an elapse of the time is detected;
an information storage control unit, wherein when the power supply control unit detects the elapse of the time from the start of power supply to the information display unit while the information display unit fixedly displays the information, the information storage control unit makes the storage unit to store the information being fixedly displayed before the power supply is turned off by the power supply control unit; and
a storage information display-control unit, wherein when the power supply to the information display unit is resumed, the storage information display-control unit makes an judgment whether the information fixedly displayed before the power supply was lately turned off is stored in the storage unit, and when the information stored in the storage unit is present, the storage information display-control unit makes the information display unit to fixedly display the information.

7. The telescopic system according to claim 6, wherein when the information storage control unit detects that the setting switch is set into the first setting state while the information display unit fixedly displays the information, the information storage control unit stores the information fixedly displayed in the storage unit, and
when the power supply control unit detects that the setting switch is set into the first setting state while power supply is turned on, the power supply control unit forcibly turns off the power supply.

8. A telescopic system comprising:
an objective optical system for observing an object,
an ocular optical system;
an orientation detection unit that detects an orientation of the object and outputs a signal on the orientation;
an information display unit that displays an orientation angle of the object in a -visual field of the ocular optical system on the basis of the signal from the orientation detection unit;
a storage unit that store data;
a reference orientation setting unit that detects whether a switch is set into a first setting state, wherein the first setting state is detected, the reference orientation setting unit makes the storage unit to store the orientation angle detected by the orientation detection unit as a reference orientation angle;
a relative orientation display-control unit that detects whether the switch is set into a second setting state after the reference orientation angle is stored in the storage unit by the reference orientation setting unit, wherein when the second setting state is detected, the relative orientation display-control unit subtracts the reference orientation angle stored in the storage unit from the orientation angle detected by the orientation detection unit to provide a subtraction value as a relative orientation angle, and the relative orientation display-control unit makes the information display unit to display the subtraction value.

9. The telescopic system according to claim 8, wherein the relative orientation display-control unit has a blinking control unit that makes the information display unit to display the subtraction value in a blinking state.

10. The telescopic system according to claim 8, wherein when the first setting state is detected, the relative orientation display-control unit forces the information display unit to display the orientation angle as being zero.
